# EUROPÄISCHE PATENTSCHRIFT

(11) **EP 2 088 041 B1**
(45) Veröffentlichungstag und Bekanntmachung des Hinweises auf die Patenterteilung: **31.03.2010**
(21) Anmeldenummer: 08002316.1
(22) Anmeldetag: 08.02.2008
(51) Int. Cl.: B60R 25/10, G07B 15/04

(54) **Verfahren zum Diebstahlschutz für ein in einem Parkhaus oder in einer Garage abgestelltes Fahrzeug**
Method for preventing theft related to an automobile parked in a car park or garage
Procédé de protection contre le vol pour un véhicule parqué dans un parc de stationnement ou un garage

(43) Veröffentlichungstag der Anmeldung: 12.08.2009
(73) Patentinhaber: SkiData AG, 5083 Grödig/Salzburg (AT)
(72) Erfinder: Pamminger, Herbert, 4814 Neukirchen (AT); Ponert, Gregor, 5020 Salzburg (AT); Fox, Dirk, 83483 Bischofswiesen (DE)
(74) Vertreter: Karakatsanis, Georgios

(56) Entgegenhaltungen:
- EP-A- 1 353 298
- WO-A-00/46068
- WO-A-01/90514
- FR-A- 2 648 595
- FR-A- 2 872 321

## Beschreibung

Die vorliegende Erfindung bezieht sich auf ein Verfahren zum Diebstahlschutz für ein in einem Parkhaus oder in einer Garage abgestelltes Fahrzeug gemäß dem Oberbegriff des Patentanspruchs 1.

Aus dem Stand der Technik ist bekannt, RFID-Technologie zur Bereitstellung von Informationen auf einem mobilen Kommunikationsgerät, beispielsweise auf einem Mobiltelefon zu verwenden. Ferner ist bekannt, durch eine berührungslose RFID-Interaktion zwischen einem Smartposter und einem RFID-fähigen Gerät Informationen an das RFID-fähige Gerät zu übertragen.

In der Regel wird hierbei als RFID-Technologie NFC - Technologie eingesetzt (NFC - Technologie steht für Near-Field-Communication - Technologie, die bekannterweise eine auf RFID-Funktechnologie basierende Funktechnologie für kurze Distanzen ist).

Beispielsweise ist aus der EP 162 2346 A1 ein Verfahren bekannt, bei dem das mobile Kommunikationsgerät eine RFID-Lesevorrichtung umfasst, wobei anhand der empfangenen RFID-Informationen durch eine Menüführung weitere Informationen über eine Netzwerkschnittstelle angefordert werden können.

Im Rahmen der EP 162 2346 A1 wird ein Verfahren vorgestellt, durch dessen Durchführung die Bestellung und Bezahlung eines ein RFID-Label aufweisenden Gegenstandes ermöglicht wird.

Bei groß dimensionierten Garagen und Parkhäusern, beispielsweise bei Parkhäusern in der Nähe von Flughäfen, Stadien oder Einkaufszentren kann sich aufgrund der Vielzahl der abgestellten Fahrzeuge eine Überwachung zum Zweck des Diebstahlschutzes als äußerst schwierig und kostenintensiv gestalten; aus diesem Grunde sind die meisten Parkhäuser kaum oder schlecht überwacht.

Die dokumente WO 00/46068 und WO 01/90514 offenbaren Parhäusermanagementsysteme, die einen Diebstahlschutz der abgestellten Fahrzeuge ermöglichen.

Der vorliegenden Erfindung liegt daher die Aufgabe zugrunde, ein Verfahren zum Diebstahlschutz für ein in einem Parkhaus oder in einer Garage abgestelltes Fahrzeug zur Verfügung zu stellen, durch dessen Durchführung die Überwachung der abgestellten Fahrzeuge sowie die Benachrichtigung des Fahrzeugbenutzers auf einfache Weise erfolgt.

Diese Aufgabe wird durch die Merkmale der Patentansprüche 1 und 2 gelöst. Weitere erfindungsgemäße Ausgestaltungen und Vorteile gehen aus den Unteransprüchen hervor.

Demnach wird im Rahmen einer ersten Variante des Verfahrens zum Diebstahlschutz für ein in einem Parkhaus oder in einer Garage abgestelltes Fahrzeug vorgeschlagen, dass für den Fall von Parkhäusern oder Garagen mit Einzelstellplatzüberwachung nach dem Abstellen des Fahrzeugs mittels einer RFID- bzw. NFC-Interaktion zwischen einem an jedem Stellplatz eines Parkhauses vorgesehenen und dem Stellplatz zugeordneten Smartposter, umfassend ein RFID- bzw. NFC-Label enthaltend einen zu stellplatzspezifischen Inhalt führenden aktivierbaren Link und einem RFID- bzw. NFC-fähigen tragbaren Gerät bzw. einem Mobiltelefon des Benutzers des Fahrzeugs die Stellplatzinformation und der aktivierbare Link an das RFID- bzw. NFC-fähige tragbare Gerät bzw. an das Mobiltelefon übermittelt werden, wobei nach der Aktivierung des Links durch Verbindung zwischen dem tragbaren Gerät und einem Server des Parkhauses die Einzelstellplatzüberwachung des Stellplatzes aktiviert wird derart, dass ein Alarm erfolgt, wenn das Fahrzeug bewegt wird ohne dass vorher über eine erneute RFID- bzw. NFC- Interaktion des tragbaren Gerätes bzw. des Mobiltelefons des Benutzers mit dem Smartposter und eine anschließende entsprechende Aktivierung des dadurch übermittelten Links die Einzelstellplatzüberwachung des Stellplatzes deaktiviert wird.

Das tragbare Gerät im Sinne der Erfindung kann beispielsweise ein Notebook oder ein PDA sein, wobei es vorzugsweise auch eine GSM-basierte Kommunikation ermöglicht bzw. die Funktionalität eines Mobiltelefons aufweist. Die Aktivierung des Links erfolgt vorzugsweise mittels eines Mobilfunknetzes, mittels WLAN, Bluetooth ® oder über eine andere berührungslose Verbindungstechnologie.

Die Aktivierung und Deaktivierung der Einzelstellplatzüberwachung kann anhand einer Menüführung auf dem tragbaren Gerät bzw. dem Mobiltelefon nach Aktivierung des Links erfolgen. Gemäß einer Ausgestaltung der Erfindung wird bei der Aktivierung der Einzelstellplatzüberwachung die Seriennummer des tragbaren Gerätes bzw. des Mobiltelefons und/oder der SIM-Karte und/oder eines Sicherheitsspeichers und/oder des Speichermoduls des tragbaren Gerätes bzw. des Mobiltelefons an den Server des Parkhauses übermittelt und dort gespeichert, wobei eine Deaktivierung der Einzelstellplatzüberwachung nur dann erfolgt, wenn bei der Deaktivierung der Einzelstellplatzüberwachung die zumindest eine übermittelte Seriennummer mit der im Server gespeicherten Seriennummer übereinstimmt.

Dadurch wird in vorteilhafter Weise gewährleistet, dass keine unbefugte Person das Fahrzeug bewegen kann, ohne dass Alarm ausgelöst wird.

Alternativ zu dieser Vorgehensweise kann der Benutzer bei der Aktivierung der Einzelstellplatzüberwachung ein Passwort eingeben, welches im Server gespeichert wird und das bei der Deaktivierung der Einzelstellplatzüberwachung erneut eingegeben werden muss, um die Einzelstellplatzüberwachung zu deaktivieren. Auf diese Weise kann eine weitere, befugte Person durch Eingabe des Passworts das Fahrzeug bewegen.

Erfindungsgemäß kann vorgesehen sein, dass für den Fall, dass ein Alarm ausgelöst wird, der Benutzer des Fahrzeugs durch eine SMS oder einen automatisierten Anruf auf sein tragbares Gerät bzw. Mobiltelefon informiert wird, wobei in diesem Fall bei der Aktivierung der Einzelstellplatzüberwachung die Telefonnummer an den Server übermittelt wird.

Für den Fall von Parkhäusern oder Garagen umfassend ein Kennzeichenerfassungssystem kann gemäß einer weiteren Ausgestaltung der Erfindung vorgesehen sein, dass anhand einer RFID- bzw. NFC-Interaktion zwischen einem Smartposter, umfassend ein RFID- bzw. NFC-Label enthaltend einen aktivierbaren Link und einem RFID- bzw. NFC-fähigen tragbaren Gerät bzw. einem Mobiltelefon des Benutzers des Fahrzeugs ein aktivierbarer Link an das RFID- bzw. NFC-fähige tragbare Gerät bzw. an das Mobiltelefon übermittelt wird, wobei nach der Aktivierung des Links durch Verbindung mit einem Server des Parkhauses der Benutzer des Fahrzeugs das Fahrzeugkennzeichen eingibt, welches auf dem Server gespeichert wird und eine Kennzeichenüberwachung anhand eines Kennzeichenerfassungssystems an der Parkhausausfahrt aktiviert.

Im Gegensatz zu der vorhergehenden Variante des erfindungsgemäßen Verfahrens ist nicht erforderlich, dass jedem Stellplatz ein Smartposter zugeordnet ist, da keine Stallplatzbezogenen Informationen übermittelt werden.

Für den Fall, dass jedem Stellplatz ein Smartposter zugeordnet ist können anhand der Aktivierung eines Links, das im Smartposter enthalten ist, auch stellplatzbezogene Informationen an das Mobiltelefon des Benutzers übermittelt werden, durch die der Benutzer zum Stellplatz des Fahrzeugs geführt wird. Beispielsweise kann mittels der RFID- bzw. NFC-Interaktion zusammen mit der Stellplatzinformation auch ein Link an das tragbare Gerät bzw. an das Mobiltelefon übermittelt werden, durch dessen Aktivierung und nach entsprechender Verbindung mit einem Server der Stellplatz des Fahrzeugs auf einer Karte angezeigt wird.

Alternativ oder zusätzlich zu der Anzeige des Stellplatzes auf einer Karte können durch die Aktivierung des Links am tragbaren Gerät bzw. am Mobiltelefon Informationen angezeigt werden, durch die der Benutzer zum Stellplatz des Fahrzeugs geführt wird. Hierbei ist es möglich, dass die Karte bzw. die Informationen, durch die der Benutzer zum Stellplatz des Fahrzeugs geführt wird, zusammen mit der Stellplatzinformation durch die RFID- bzw. NFC-Interaktion an das tragbare Gerät bzw. das Mobiltelefon des Benutzers übermittelt werden.

Gemäß der Erfindung erfolgt ein Alarm, wenn das Fahrzeug das Parkhaus verlässt (das Kennzeichen wird mittels des Kennzeichenerfassungssystems erfasst und im Server ausgewertet) ohne dass vorher über eine erneute RFID- bzw. NFC- Interaktion des tragbaren Gerätes bzw. des Mobiltelefons des Benutzers mit dem Smartposter und eine anschließende entsprechende Aktivierung des dadurch übermittelten Links die Kennzeichenüberwachung für das Fahrzeugkennzeichen deaktiviert wird.

Analog zu der Ausgestaltung für den Fall einer Einzelstellplatzüberwachung kann bei der Aktivierung der Kennzeichenüberwachung die Seriennummer des tragbaren Gerätes bzw. des Mobiltelefons und/oder der SIM-Karte und/oder eines Sicherheitsspeichers und/oder des Speichermoduls des tragbaren Gerätes bzw. des Mobiltelefons an den Server des Parkhauses übermittelt und dort gespeichert, wobei eine Deaktivierung der Kennzeichenüberwachung nur dann erfolgt, wenn bei der Deaktivierung der Einzelstellplatzüberwachung die übermittelte Seriennummer mit der im Server gespeicherten Seriennummer übereinstimmt. Es kann auch alternativ vorgesehen sein dass der Benutzer bei der Aktivierung der Kennzeichenüberwachung ein Passwort eingebt, welches im Server gespeichert wird und welches bei der Deaktivierung der Kennzeichenüberwachung erneut eingegeben werden muss, um die Überwachung zu deaktivieren.

Für den Fall, dass ein Alarm ausgelöst wird, kann der Benutzer des Fahrzeugs durch eine SMS oder einen automatisierten Anruf auf sein Mobiltelefon bzw. auf das tragbare Gerät informiert werden, wobei in diesem Fall bei der Aktivierung der Kennzeichenüberwachung die Telefonnummer des Benutzers an den Server übermittelt wird.

Im Rahmen einer weiteren vorteilhaften Ausgestaltung der Erfindung, kann vorgesehen sein, dass das Fahrzeug ein aktivierbares RFID- bzw. NFC-Label, enthaltend das Fahrzeugkennzeichen, zur Interaktion mit einem stellplatzgebundenen und mit einem Server verbundenen RFID- bzw. NFC-fähigen Gerät aufweist, so dass beim Parken des Fahrzeugs das Kennzeichen des geparkten Fahrzeugs an einen Server übermittelt wird, wobei nach der Übermittlung des Kennzeichens geprüft wird, ob das Fahrzeug dort parken darf, beispielsweise, wenn es sich um den Stellplatz um einen einem bestimmten Fahrzeug zugeordneten Dauermietparkplatz handelt. Ist dies nicht der Fall oder weist das Fahrzeug kein aktivierbares RFID- bzw. NFC-Label auf, so erfolgt ein Alarm bzw. eine akustische Warnung sowie eine Mitteilung an die Parkhausbetreiber.

Beispielsweise kann das RFID-Label an der Front- oder Unterseite des Fahrzeugs angebracht sein und mit einem entsprechend angeordneten RFID-fähigen Gerät interagieren.

## Patentansprüche

1. Verfahren zum Diebstahlschutz für ein in einem Parkhaus oder in einer Garage abgestelltes Fahrzeug, wobei, für den Fall von Parkhäusern oder Garagen mit Einzelstellplatzüberwachung nach dem Abstellen des Fahrzeugs mittels einer RFID- bzw. NFC-Interaktion zwischen einem an jedem Stellplatz eines Parkhauses vorgesehenen und dem Stellplatz zugeordneten Smartposter, umfassend ein RFID- bzw. NFC-Label enthaltend einen zu stellplatzspezifischen Inhalt führenden aktivierbaren Link und einem RFID- bzw. NFC-fähigen tragbaren Gerät bzw. einem Mobiltelefon des Benutzers des Fahrzeugs der aktivierbare Link an das RFID- bzw. NFC-fähige tragbare Gerät bzw. an das Mobiltelefon übermittelt wird, wobei nach der Aktivierung des Links durch Verbindung zwischen dem tragbaren Gerät und einem Server des Parkhauses die Einzelstellplatzüberwachung des Stellplatzes aktiviert wird derart, dass ein Alarm erfolgt, wenn das Fahrzeug bewegt wird ohne dass vorher über eine erneute RFID- bzw. NFC-Interaktion des tragbaren Gerätes bzw. des Mobiltelefons des Benutzers mit dem Smartposter und eine anschließende entsprechende Aktivierung des **dadurch** übermittelten Links die Einzelstellplatzüberwachung des Stellplatzes deaktiviert wird.

2. Verfahren zum Diebstahlschutz für ein in einem Parkhaus oder in einer Garage abgestelltes Fahrzeug, wobei, für den Fall von Parkhäusern oder Garagen umfassend ein Kennzeichenerfassungssystem anhand einer RFID- bzw. NFC-Interaktion zwischen einem Smartposter, umfassend ein RFID- bzw. NFC-Label enthaltend einen aktivierbaren Link und einem RFID- bzw. NFC-fähigen tragbaren Gerät bzw. einem Mobiltelefon des Benutzers des Fahrzeugs ein aktivierbarer Link an das RFID- bzw. NFC-fähige tragbare Gerät bzw. an das Mobiltelefon übermittelt wird, wobei nach der Aktivierung des Links durch Verbindung zwischen dem tragbaren Gerät und einem Server des Parkhauses der Benutzer des Fahrzeugs das Fahrzeugkennzeichen eingibt, welches auf dem Server gespeichert wird und eine Kennzeichenüberwachung anhand eines Kennzeichenerfassungssystems an der Parkhausausfahrt aktiviert, wobei ein Alarm erfolgt, wenn das Fahrzeug das Parkhaus oder die Garage verlässt ohne dass vorher über eine erneute RFID- bzw. NFC- Interaktion des tragbaren Gerätes bzw. des Mobiltelefons des Benutzers mit dem Smartposter und eine anschließende entsprechende Aktivierung des **dadurch** übermittelten Links die Kennzeichenüberwachung für das Fahrzeugkennzeichen deaktiviert wird.

3. Verfahren zum Diebstahlschutz für ein in einem Parkhaus oder in einer Garage abgestelltes Fahrzeug, nach Anspruch 1 oder 2, **dadurch gekennzeichnet, dass** die Aktivierung und Deaktivierung der Einzelstellplatzüberwachung bzw. der Kennzeichenüberwachung anhand einer Menüführung auf dem tragbaren Gerät bzw. dem Mobiltelefon nach Aktivierung des Links erfolgt.

4. Verfahren zum Diebstahlschutz für ein in einem Parkhaus oder in einer Garage abgestelltes Fahrzeug, nach Anspruch 1, 2 oder 3, **dadurch gekennzeichnet, dass** bei der Aktivierung der Einzelstellplatzüberwachung bzw. der Kennzeichenüberwachung die Seriennummer des tragbaren Gerätes bzw. des Mobiltelefons und/oder der SIM-Karte und/oder eines Sicherheitsspeichers und/oder des Speichermoduls des tragbaren Gerätes bzw. des Mobiltelefons an den Server des Parkhauses übermittelt und dort gespeichert wird, wobei eine Deaktivierung der Einzelstellplatzüberwachung bzw. der Kennzeichenüberwachung nur dann erfolgt, wenn bei der Deaktivierung der Einzelstellplatzüberwachung bzw. der Kennzeichenüberwachung die zumindest eine übermittelte Seriennummer mit der im Server gespeicherten Seriennummer übereinstimmt.

5. Verfahren zum Diebstahlschutz für ein in einem Parkhaus oder in einer Garage abgestelltes Fahrzeug, nach Anspruch 1, 2 oder 3, **dadurch gekennzeichnet, dass** bei der Aktivierung der Einzelstellplatzüberwachung bzw. der Kennzeichenüberwachung ein Passwort eingegeben wird, welches im Server gespeichert wird und das bei der Deaktivierung der Einzelstellplatzüberwachung bzw. der Kennzeichenüberwachung erneut eingegeben werden muss, um die Einzelstellplatzüberwachung bzw. die Kennzeichenüberwachung zu deaktivieren.

6. Verfahren zum Diebstahlschutz für ein in einem Parkhaus oder in einer Garage abgestelltes Fahrzeug, nach einem der vorangehenden Ansprüche, **dadurch gekennzeichnet, dass** für den Fall, dass ein Alarm ausgelöst wird, der Benutzer des Fahrzeugs durch eine SMS oder einen automatisierten Anruf auf sein Mobiltelefon bzw. auf das tragbare Gerät informiert wird, wobei in diesem Fall bei der Aktivierung der Einzelstellplatzüberwachung bzw. der Kennzeichenüberwachung die Telefonnummer des Benutzers an den Server übermittelt wird.

## Claims

1. A method of protecting a vehicle parked in a car park or in a garage against theft, wherein in the case of car parks or garages offering the monitoring of each single parking space after a vehicle has been parked there, such monitoring involves an RFID or NFC interaction between a smart poster provided at each parking space of a car park and associated therewith, such interaction using an RFID or NFC tag, respectively, containing an activatable link leading to contents specific to said parking space, and an RFID- or NFC-enabled portable device or a mobile telephone of the vehicle user's, said activatable link being transmitted to the RFID- or NFC-enabled portable device or to the mobile telephone, respectively, and wherein, following the activation of said link by connection of the portable device and of a server associated with the car park, said single parking space monitoring of the parking space being activated in a manner such that an alarm is tripped if the vehicle is moved without prior deactivation of the single parking space monitoring through another RFID or NFC interaction between the user's portable device or mobile telephone and the smart poster and without subsequent corresponding activation of the link so transmitted.

2. A method of protecting against theft a vehicle parked in a car park or in a garage, wherein in the case of car parks or garages offering the monitoring of watch single parking space after vehicles have been parked there, such monitoring involves RFID or NFC interaction between a smart poster provided at each parking space of a car park and associated therewith, such interaction comprising an RFID or NFC tag, respectively, containing an activatable link leading to contents specific to said parking space, and an RFID- or NFC-enabled portable device or a mobile telephone of the vehicle user's, said activatable link being transmitted to the RFID- or NFC-enabled portable device or to the mobile telephone, respectively, and wherein, following the activation of said link by connection of the portable device and a server of the car park, the vehicle user enters the vehicle's registration number for storage by the server and activation of a number plate monitoring using a number plate monitoring system placed at the car park exit, with an alarm being tripped in case the vehicle leaves the car park or the garage without prior deactivation of the number monitoring scheme for the vehicle's registration number through another RFID or NFC interaction between the user's portable device or mobile telephone and the smart poster and without subsequent corresponding activation of the link so transmitted.

3. Theft protection method for a vehicle parked in a car park or a garage as in claim 1 or 2, **characterized in that** the activation and deactivation of the single parking space or the number monitoring scheme are effected using a menu guidance scheme on the portable device or the mobile telephone, following activation of said link.

4. Theft protection method for a vehicle parked in a car park or in a garage as in claim 1, 2 or 3, **characterized by** activation of said single parking space or registration number monitoring scheme involving the transmission to, and storage by, the server of the car park of the serial number of the portable unit or of the mobile telephone and/or of the SIM card and/or of a security memory and/or of the memory module in the portable unit or of the mobile telephone, respectively, with deactivation of the single parking space monitoring scheme being effected only if, upon deactivation of the single parking space or registration number monitoring scheme, the at least one serial number transmitted agrees with the serial number memorized by the server.

5. Theft protection method for a vehicle parked in a car park or in a garage as in claim 1, 2 or 3, **characterized by** activation of the single parking space or registration number monitoring scheme involving the entry of a password and the storage thereof by the server, with password re-entry being required upon deactivation of the single parking space or registration number monitoring scheme for deactivation of the latter.

6. Theft protection method for a vehicle parked in a car park or in a garage as claimed in any one of the preceding claims, **characterized in that**, if an alarm is tripped, the vehicle's user is informed by an SMS or an automatic call to the user's mobile telephone or portable device, respectively, with the user's telephone number being transmitted to the server when the single parking place or registration monitoring scheme is activated.

## Revendications

1. Procédé de protection contre le vol pour un véhicule garé dans un parking couvert ou dans un garage, dans lequel, dans le cas de parkings couverts ou de garages avec surveillance de places individuelles de parking, le véhicule une fois garé, au moyen d'une interaction RFID ou NFC, respectivement, entre un smartposter prévu sur chaque place de parking d'un parking couvert et associé à la place de parking, comprenant un label RFID ou NFC contenant un lien activable menant à contenu spécifique pour chaque place de parking, et un appareil portable adapté à RFID ou NFC ou un téléphone portable de l'utilisateur du véhicule, le lien activable est transmis à l'appareil portable adapté à RFID ou NFC ou au téléphone portable, et après l'activation du lien par la connexion entre l'appareil portable et un serveur du parking couvert, la surveillance de place individuelle de parking de ladite place de parking est activée de telle sorte qu'une alarme se produit lorsque le véhicule est déplacé sans que précédemment, la surveillance de place individuelle de parking de ladite place de parking soit désactivée via une nouvelle interaction RFID ou NFC de l'appareil portable ou du téléphone portable de l'utilisateur avec le smartposter et via une activation suivante correspondante du lien ainsi transmis.

2. Procédé de protection contre le vol pour un véhicule garé dans un parking couvert ou dans un garage, dans lequel, dans le cas de parkings couverts ou de garages au moyen d'une interaction RFID ou NFC, respectivement, entre un smartposter comprenant un label RFID ou NFC contenant un lien activable et un appareil portable adapté à RFID ou NFC ou un téléphone portable de l'utilisateur du véhicule, un lien activable est transmis à l'appareil portable adapté à RFID ou NFC ou au téléphone portable, et après l'activation du lien par la connexion entre l'appareil portable et un serveur du parking couvert, l'utilisateur du véhicule introduit le numéro d'immatriculation du véhicule qui est mémorisé sur le serveur et active une surveillance de numéro d'immatriculation à l'aide d'un système de détection de numéro d'immatriculation à la sortie du parking couvert, une alarme se produisant lorsque le véhicule quitte le parking couvert ou le garage sans que précédemment, la surveillance du numéro d'immatriculation soit désactivée pour le numéro d'immatriculation via une nouvelle interaction RFID ou NFC de l'appareil portable ou du téléphone portable de l'utilisateur avec le smartposter et via une activation suivante correspondante du links ainsi transmis.

3. Procédé de protection contre le vol pour un véhicule garé dans un parking couvert ou dans un garage, selon la revendication 1 ou 2, **caractérisé en ce que** l'activation et la désactivation de la surveillance de place individuelle de parking ou de la surveillance de numéro d'immatriculation est produite à l'aide d'un guidage de menu sur l'appareil portable ou sur le téléphone portable après activation du lien

4. Procédé de protection contre le vol pour un véhicule garé dans un parking couvert ou dans un garage, selon la revendication 1, 2 ou 3,**caractérisé en ce que** lors de l'activation de la surveillance de place individuelle de parking ou de la surveillance de numéro d'immatriculation, le numéro de série de l'appareil portable ou du téléphone portable et/ou de la carte SIM et/ou d'une mémoire de sécurité et/ou d'un module de stockage de l'appareil portable ou du téléphone portable est transmis au serveur du parking couvert et y est mémorisé, une désactivation de la surveillance de place individuelle de parking ou de la surveillance de numéro d'immatriculation n'étant produite que si lors de la désactivation de la surveillance de place individuelle de parking ou de la surveillance de numéro d'immatriculation, ledit au moins un numéro de série transmis coïncide avec le numéro de série mémorisé dans le serveur.

5. Procédé de protection contre le vol pour un véhicule garé dans un parking couvert ou dans un garage, selon la revendication 1, 2 ou 3, **caractérisé en ce que** lors de l'activation de la surveillance de place individuelle de parking ou de la surveillance de numéro d'immatriculation est introduit un mot de passe qui est mémorisé dans le serveur et qui, lors de la désactivation de la surveillance de place individuelle de parking ou de la surveillance de numéro d'immatriculation, doit être de nouveau introduit pour désactiver la surveillance de place individuelle de parking ou la surveillance de numéro d'immatriculation.

6. Procédé de protection contre le vol pour un véhicule garé dans un parking couvert ou dans un garage, selon l'une quelconque des revendications précédentes, **caractérisé en ce que** dans le cas où une alarme est déclenchée, l'utilisateur du véhicule est informé par un SMS ou par un appel automatisé sur son téléphone portable ou sur l'appareil potable, et dans ce cas, lors de l'activation de la surveillance de place individuelle de parking, le numéro de téléphone de l'utilisateur étant transmis au serveur.
